# EUROPÄISCHE PATENTSCHRIFT

(11) **EP 1 043 349 B1**
(45) Veröffentlichungstag und Bekanntmachung des Hinweises auf die Patenterteilung: **12.07.2006**
(21) Anmeldenummer: 00102913.1
(22) Anmeldetag: 12.02.2000
(51) Int. Cl.: C08G 18/10, C08G 18/32, C08G 18/48, C08G 18/66, C08G 18/73, C08G 18/42

(54) **Thermoplastisch verarbeitbare Polyurethan-Formmasse**
Thermoplastically processable Polyurethane moulding compound
Matière polyuréthane de moulage faconnable à l'état thermoplastique

(30) Priorität: 09.04.1999 DE 19915932
(43) Veröffentlichungstag der Anmeldung: 11.10.2000
(73) Patentinhaber: Carl Freudenberg KG, 69469 Weinheim (DE); Intier Automotive Eybl Interiors GmbH, 94315 Straubing (DE)
(72) Erfinder: Mühlfeld, Horst, 64689 Grasellenbach (DE); Wagener, Silke, Dr., 76829 Landau (DE)

(56) Entgegenhaltungen:
- EP-A- 0 593 975
- DE-C- 4 319 439
- US-A- 4 111 913

## Beschreibung

### Technisches Gebiet

Die Erfindung betrifft eine thermoplastisch verarbeitbare Polyurethan-Formmasse, die frei von migrationsfähigen Nebenprodukten ist und eine hohe Lichtechtheit aufweist.

### Stand der Technik

Aus den Dokumenten DE 26 58 136 und DE 42 03 307 sind thermoplastisch verarbeitbare Polyurethan-Formmassen bekannt, die aus Gemischen verschiedener aliphatischer Polyole und 1,6-Hexamethylendiisocyanat mit Kettenverlängerungsmitteln wie 1,4-Butandiol bestehen. Die dort beschriebenen Polyurethan-Formmassen können insbesondere zur Herstellung von LebensmtttelverpacKungen, aber auch zur Herstellung von Folien für dekorative Anwendungen eingesetzt werden. Die in den Patentschriften definierten Polyurethan-Formmassen sind zwar bezüglich ihrer Schmelzeigenschaften für thermoplastische Verarbeitungsverfahren sowie hinsichtlich ihres Festigkeitsniveaus für die vorgenannten Anwendungen geeignet, von Nachteil sind jedoch Anteile cyclischer Oligourethane in den Polyurethan-Formmassen. Durch Migration dieser Cyclooligourethane können optische Veränderungen z.B. auf der Oberfläche von Folien hervorgerufen werden. Für die meisten Anwendungen ist dies in höchstem Maße unerwünscht. So ist die Anwendung als Lebensmittelverpackung und als Formkörper für den hygienischen oder medizinischen Gebrauch durch das Vorhandensein migrationsfähiger Substanzen ausgeschlossen.

Aus dem Dokument US 4,111,913 sind weiterhin elastische Formmassen auf Polyurethanbasis bekannt, bei denen die Grundeinheiten zu einem wesentlichen Teil aus linearen, aliphatischen C₆-Einheiten aufgebaut sind und die niedermolekularen Kettenverlängerer nur zu 50 Mol% an linearen aliphatischen C₆₋Einheiten enthalten dürften. Als Beispiele für die Polyol-Grundeinheit sind Polyole aufgebaut aus ε-Caprolacton oder aus Adipinsäure und 1,6-Hexandiol genannt.

Der Einsatz der bekannten Polyurethan-Formmassen im Kraftfahrzeug-Innenbereich ist aufgrund der verschärften Forderungen der Automobilindustrie nach Werkstoffen mit geringer Neigung zur Weißbelagbildung daher nicht mehr gegeben. Auch eine Anwendung als Lebensmittelverpackung und als Formkörper für den hygienischen oder medizinischen Gebrauch ist durch die Migrationsprodukte ausgeschlossen,

### Darstellung der Erfindung

Die Erfindung hat sich die Aufgabe gestellt, eine thermoplastisch verarbeitbare Polyurethan-Formmasse, die frei von migrationsfähigen Nebenproduktenist, und deren Verwendung anzugeben.

Die Aufgabe wird erfindungsgemäß durch die gattungsgemäß angegebene thermoplastisch verarbeitbare Polyurethan-Formmasse gelöst, die in der in Anspruch 1 dargelegten Weise erhältlich ist. Unter einer thermoplastisch verarbeitbaren Polyurethan-Formmasse, die frei von migrationsfähigen Nebenprodukten ist, wird im Sinne dieser Erfindung eine solche verstanden, bei der unter den im weiteren angegebenen Bedingungen keine Oligourethane an der Oberfläche von Proben nachweisbar sind.

Eine bevorzugte Zusammensetzung der erfindungsgemäßen Polyurethan-Formmasse sind in den Ansprüchen 2 und 3 und bevorzugte Verwendungen sind in den Ansprüchen 4 - 7 dargelegt.

Bei der Umsetzung von Polyether- und Polyester-Polyolen mit 1,6-Hexamethylendiisocyanat und dem vorzugsweise verwendeten Kettenverlängerungsmittel 1,4-Butandiol entstehen cyclische Oligourethane, insbesondere cyclische Dimere und cyclische Tetramere aus 1,4-Butandiol und 1,6-Hexamethylendiisocyanat. Diese niedermolekularen Verbindungen besitzen ein ausgeprägtes Migrationsvermögen und können u.a. eine Weißbelagbildung an der Oberfläche von Polyurethan-Formmassen hervorrufen.

Das cyclische Dimere ist wasserlöslich und sublimierbar, das cyclische Tetramere ist kristallin, wasserunlöslich und nicht sublimierbar. Beide Verbindungen sind migrationsfähig und bilden an der Oberfläche der Polyurethan-Formmassen einen Weißbelag. Polyurethane mit migrationsfähigen und sublimierbaren Oligomeranteilen, die zum Teil noch wasserlöslich sind, sind daher für viele Anwendungen nicht geeignet. Eine Anwendung im Lebensmittel-, Hygiene- und Medizinbereich muß unter anderem wegen der zum Teil guten Löslichkeit der Migrationsprodukte in wäßrigen Lösemitteln ausgeschlossen werden. Ein Einsatz der bezüglich ihrer mechanischen Eigenschaften hochwertigen Polyurethane als Oberflächenverkleidung z.B. im Kraftfahrzeug-Innenbereich ist aus Gründen der Weißbelagbildung auf der Oberfläche daher nicht möglich.

Eine Anwendung im Lebensmittel- Hygiene- und Medizinbereich muß unter anderem wegen der zum Teil guten Löslichkeit der Migrationsprodukte in wässrigen Lösemitteln ausgeschlossen werden.

Überraschender Weise wurde gefunden, daß bei der Herstellung aliphatischer Polyurethan-Formmassen auf Polyether- und/oder Polyesterolbasis durch Umsetzung mit 1,6-Hexamethylendiisocyanat und einem Kettenverlägerungsmittel ausgewählt aus der Gruppe 1,5-Pentandiol, 1,6-Hexandiol und 1,4-Cyclohexandiol keine im speziell entwickelten Weißbelag-Test nachweisbaren cyclischen Oligourethane gebildet werden.

Die Bildung des Weißbelages durch Migration der Oligourethane ist ein kontinuierlicher Prozeß. Der Weißbelag kann erst nach Wochen oder Monaten deutlich sichtbar werden. Durch Lagerung in wasserdampfgesättigter Atmosphäre wird der Migrationsprozeß erheblich beschleunigt, so daß eine Identifikation und Charakterisierung durch eine sehr empfindliche Nachweismethode wie der FTIR-spektroskopische Untersuchung an der Probenoberfläche bereits innerhalb von zwei Tagen nach Lagerung unter den vorgenannten Bedingungen möglich sind.

Die Weißbelagbildung wird geprüft durch Exposition von Proben über 48 Stunden bei 48°C und 80°C in wasserdampfgesättigter Atmosphäre durch Fourier-Transformations-Infrarot-Spektroskopie (FTIR). Die Di- und Tetraurethane weisen im Wellenlängenbereich von 1800 cm⁻¹ bis 1400 cm⁻¹ eine charakteristische Bandenkombination auf, die nicht von den spezifischen Banden der Polyurethanmatrix überlagert wird.

Die erfindungsgemäß erhältlichen Polyurethan-Formmassen weisen wie die nachfolgend angegebenen Beispiele zeigen keine mechanischen oder verarbeitungstechnischen Nachteile gegenüber den bekannten aliphatischen thermoplastisch verarbeitbare Polyurethan-Formmassen auf. Auch das Kristallisationsverhalten für einen wirtschaftlichen Verarbeitungsprozeß wird nicht wesentlich beeinflußt, insbesondere wenn 1,6-Hexandiol als Kettenverlängerungsmittel eingesetzt wird. Sie weisen darüber hinaus die nachfolgenden Vorteile auf:
- keine nach den angegebenen Verfahren nachweisbaren cyclischen Oligourethane,
- gute Verarbeitbarkeit in Thermoplast-Verarbeitungsverfahren wie Spritzgloßen, Schmelzextrussion, Schmelzspinn-, Sinter- oder Schmelzklebeverfahren,
- gutes Kristallisationsverhalten, insbesondere eine schnelle Rekristallisation für einen wirtschaftlichen Verarbeitungsprozeß in den vorgenannten Verfahren,
- hohe Zug-, Einreiß- und Weiterreißfestigkeit,
- gute elastische Eigenschaften,
- hohe Lichtechtheit, d.h., keine Vergilbung bei Lichteinwirkung.
Die erfindungsgemäßen Polyurethan-Formmassen können bei ihrer Herstellung oder vor ihrer Weiterverarbeitung noch mit bekannten Füll- und Zuschlagstoffen, Flamm- und Alterungsschutzmitteln sowie Verarbeitungshilfen und Pigmenten versetzt werden.

Die Erfindung wird durch die nachfolgenden Beispiele näher erläutert.

### Beispiel 1

### Zusammensetzung der Mischung

| | |
|---|---|
| 100,00 Gewichtsteile | Polycabonatdiol mit einem Molekulargewicht von 2000 und einer OH-Zahl von 56,0, |
| 13,73 Gewichtsteile | 1,5-Pentandiol, |
| 30,00 Gewichtsteile | 1,6-Hexamethylendiisocyanat |

### Herstellungsverfahren

Die Herstellung erfolgt im Einstufenverfahren. Polycarbonatdiol, 1,5-Pentandiol und 1,6-Hexamethylendiisocyanat werden unter Rühren in einem Reaktionskessel auf 80°C erwärmt. Durch die exotherme Reaktion steigt die Temperatur in etwa 12 Minuten auf 180°C an. Bei dieser Temperatur wird das Produkt auf eine Polytetrafluorethylen-Folie gegossen. Nach etwa 8 Stunden kann die entstandene Platte zu Granulat verarbeitet werden.

Die Polyurethan-Formmasse weist folgende Schmelzeigenschaften auf,
Schmelzpunkt 140°C,
Schmelzindex nach DIN ISO 1133 bei 2,16 kg Belastung.

| | |
|---|---|
| gemessen bei 170°C: | 12 g/10 min, |
| gemessen bei 200°C: | 78 g/10 min, |
| gemessen bei 220°C: | 126 g/10 min. |

Ein im Preßverfahren hergestellte 1 mm dicke Platte hat folgende Eigenschaften:

| | |
|---|---|
| Zugfestigkeit: | 29,4 MPa, |
| Bruchdehnung: | 695 %, |
| Weiterreißfähigkeit: | 60,5 N/mm. |

Prüfung auf migrationfähige Produkte in der Potyurethan-Formmasse:
Lagerung für 48 Stunden in Wasserdampf gesättigter Atmosphäre bei 48°C, keine FTIR-spektroskopisch nachweisbare Cyclooligourethan spezifische Banden
Lagerung für 48 Stunden in Wasserdampf gesättigter Atmosphäre bei 80°C, keine FTIR-spektroskopisch nachweisbare Cyclooligourethan spezifische Banden

### Beispiel 2

### Zusammensetzung der Mischung

| | |
|---|---|
| 100,00 Gewichtsteile | Polycarbonatdiol mit einem Molekulargewicht von 2000 und einer OH-Zahl von 56.0. |
| 11,10 Gewichtsteile | 1,4-Cyclohexandiol, |
| 24,00 Gewichtsteile | 1,6-Hexamethylendiisocyanat |

Die Herstellung erfolgt analog Beispiel 1.

Die Polyurethan-Formmasse weist folgende Schmelzeigenschaften auf:
Schmelzpunkt: 155°C,
Schmelzindex nach DIN ISO 1133 bei 2,16 kg Belastung.

| | |
|---|---|
| gemessen bei 170°C: | 4,8 g/10 min, |
| gemessen bei 200°C: | 39 g/10 min, |
| gemessen bei 220°C: | 92 g/10 min. |

Ein im Preßverfahren hergestellte 1 mm dicke Platte hat folgende Egenschaften:

| | |
|---|---|
| Zugfestigkeit: | 24,2 MPa, |
| Bruchdehnung: | 776 %, |
| Weiterreißfähigkeit: | 37,7 N/mm. |

Prüfung auf migrationfähige Produkte in der Polyurethan-Formmasse:
Lagerung für 48 Stunden in Wasserdampf gesättigter Atmosphäre bei 48°C, keine FTIR-spektroskopisch nachweisbare Cyclooligourethan spezifische Banden
Lagerung für 48 Stunden in Wasserdampf gesättigter Atmosphäre bei 80°C, keine FTIR-spektroskopisch nachweisbare Cyclooligourethan spezifische Banden

### Beispiel 3

### Zusammensetzung der Mischung

| | |
|---|---|
| 50,00 Gewichtsteile | Polycarbonatdiol mit einem Molekulargewicht von 2000 und einer OH-Zahl von 56,0, |
| 50,00 Gewichtsteile | Polyester auf Basis von Adipinsäure und Butandiol mit einem Molekulargewicht von 2000 und einer OH-Zahl von 56,0, |
| 15,57 Gewichtsteile | 1,6-Hexandiol, |
| 30,00 Gewichtsteile | 1,6-Hexamethylendiisocyanat |

Die Herstenung erfolgt analog Beispiel 1.

Die Polyurethan-Formmasse weist folgende Schmelzeigenschaften auf:
Schmelzpunkt 165°C,
Schmelzindex nach DIN ISO 1133 bei 2,16 kg Belastung,

| | |
|---|---|
| gemessen bei 170°C: | 4,1 g/10 min, |
| gemessen bei 200°C: | 13 g/10 min, |
| gemessen bei 220°C: | 46 g/10 min. |

Ein im Preßverfahren hergestellte 1 mm dicke Platte hat folgende Eigenschaften:

| | |
|---|---|
| Zugfesügkeit: | 48,2 MPa, |
| Bruchdehnung: | 713 %, |
| Weiterreißfähigkeit: | 96 N/mm. |

Prüfung auf migrationfähige Produkte in der Polyurethan-Formmasse:
Lagerung für 48 Stunden in Wasserdampf gesättigter Atmosphäre bei 48°C, keine FTIR-spektroskopisch nachweisbare Cyclooligourethan spezifische Banden
Lagerung für 48 Stunden in Wasserdampf gesättigter Atmosphäre bei 80°C, keine FTIR-spektroskopisch nachweisbare Cyclooligourethan spezifische Banden

## Patentansprüche

1. Thermoplastisch verarbeitbare Polyurethan-Formmasse, die frei ist von migrationsfähigen cyclischen Oligourethanen und eine hohen Lichtechtheit aufweist, erhältlich durch Umsetzung eines oder mehrerer aliphatischer Polyole mit einem Molekulargewicht von 450 bis 4000 g/mol und einer OH-Zahl von 20 bis 235 ausgewählt aus der Gruppe Polyadipate aus Methylenglykol, Diethylenglykol, Propandiol, Butandiol, Pentandiol, Neopentylglykol, Polycarbonaten, Polytetrahydrofuranen oder Kombinationen daraus, Polycarbonate, Polytetrahydrofuran und entsprechenden Copolymeren oder deren Gemische, mit 1,6-Hexamethylendiisocyanat und einem Kettenverlängerungsmittel ausgewählt aus der Gruppe 1,5-Pentandiol, 1,6-Hexandiol und 1,4-Cyclohexandiol in einem Äquivalenzverhältnis des 1,6-Hexamethylendiisocyanats zum Polyol von 1,5:1 bis 14,0:1, wobei die NCO-Kennzahl, gebildet aus dem mit 100 multiplizierten Quotienten der Äquivalenzverhältnisse von Isocyanatgruppen zur Summe der Hydroxylgruppen von Polyol und Kettenverlängerungsmittel in einem Bereich von 96 bis 105 liegt.

2. Thermoplastische Polyurethan-Formmasse nach Anspruch 1, erhältlich durch die Verwendung von Polyadipaten aus Ethylenglykol, Diethylenglykol, Propandiol, Butandiol, Pentandiol, Neopentylglykol, Polycarbonaten, Polytetrahydrofuranen oder Kombinationen daraus, Copolymeren von Polycaprolactonen mit Polycarbonaten und Polytetrahydrofuran, Polypropylenglykol, Polyethylenglykol oder deren Gemische als Polyolkomponente.

3. Thermoplastische Polyurethan-Formmasse nach Anspruch 1 oder Anspruch 2, erhältlich durch die Verwendung von 1,6-Hexandiol als Kettenverlängerungsmittel.

4. Verwendung einer thermoplastischen Polyurethan-Formmasse erhältlich nach Anspruch 1 oder 2 zur Herstellung von Oberflächenmaterialien für den Einsatz im Kraftfahrzeug-Innenbereich.

5. Verwendung einer thermoplastischen Polyurethan-Formmasse erhältlich nach Anspruch 1 oder 2 zur Herstellung von Verpackung von Lebensmitteln.

6. Verwendung einer thermoplastischen Polyurethan-Formmasse erhältlich nach Anspruch 1 oder 2 zur Herstellung von Formkörpern, Folien und Vliestoffen für hygienische und medizinische Anwendungen.

7. Verwendung einer thermoplastischen Polyurethan-Formmasse erhältlich nach Anspruch 1 oder 2 zur Herstellung von Schmelzklebern und Haftmassen für textile Anwendungen.

## Claims

1. Thermoplastically processable polyurethane moulding mass, free of cyclic oligourethanes capable of migration, and demonstrating a high level of light fastness, obtainable by reaction of one or more aliphatic polyols having a molecular weight of 450 to 4000 g/mol and an OH number of 20 to 235, selected from the group consisting of polyadipates of ethylene glycol, diethylene glycol, propanediol, butanediol, pentanediol, neopentyl glycol, polycarbonates, polytetrahydrofurans or combinations thereof, polycarbonates, polytetrahydrofuran and corresponding copolymers or mixtures thereof, with 1,6-hexamethylene diisocyanate and a chain lengthening agent selected from the group consisting of 1,5-pentanediol, 1,6-hexanediol, and 1,4-cyclohexanediol in an equivalence ratio of the 1,6-hexamethylene diisocyanate to the polyol of 1.5:1 to 14.0:1, the NCO characteristic number, formed from the quotient of the equivalence ratios of isocyanate groups to the sum of the hydroxyl groups of polyol and chain lengthening agent, multiplied by 100, lying in a range of 96 to 105.

2. Thermoplastic polyurethane moulding mass according to Claim 1, obtainable by using polyadipates of ethylene glycol, diethylene glycol, propanediol, butanediol, pentanediol, neopentyl glycol, polycarbonates, polytetrahydrofurans or combinations thereof, copolymers of polycaprolactones with polycarbonates and polytetrahydrofuran, polypropylene glycol, polyethylene glycol or mixtures thereof as the polyol component.

3. Thermoplastic polyurethane moulding mass according to Claim 1 or Claim 2, obtainable by using 1,6-hexanediol as the chain lengthening agent.

4. Use of a thermoplastic polyurethane moulding mass obtainable according to Claim 1 or 2 for producing surface materials for use in a motor vehicle interior.

5. Use of a thermoplastic polyurethane moulding mass obtainable according to Claim 1 or 2 for producing packaging for foods.

6. Use of a thermoplastic polyurethane moulding mass obtainable according to Claim 1 or 2 for producing moulded elements, films and nonwoven materials for hygiene and medical applications.

7. Use of a thermoplastic polyurethane moulding mass obtainable according to Claim 1 or 2 for producing hotmelt glues and adhesive masses for textile applications.

## Revendications

1. Matière à mouler polyuréthanne apte à la transformation thermoplastique, qui est exempte d'oligo-uréthannes cycliques aptes à la migration et présente une haute résistance à la lumière, pouvant être obtenue par la réaction d'un ou plusieurs polyols aliphatiques ayant une masse moléculaire de 450 à 4 000 g/mole et un indice de groupes OH de 20 à 235, choisis dans le groupe des polyadipates d'éthylèneglycol, diéthylèneglycol, propanediol, butanediol, pentanediol, néopentylglycol, des polycarbonates, des polytétrahydrofurannes ou des association de ceux-ci, des polycarbonates, du polytétrahydrofuranne et de copolymères correspondants ou de mélanges de ceux-ci, avec le 1,6-hexaméthylène-diisocyanate et un agent d'extension de chaîne choisi dans le groupe constitué par le 1,5-pentanediol, le 1,6-hexanediol et le 1,4-cyclohexanediol en un rapport d'équivalents du 1,6-hexaméthylène-diisocyanate au polyol allant de 1,5:1 à 14,0:1, le nombre caractéristique de groupes NCO, obtenu à partir du quotient, multiplié par 100, des rapports d'équivalents des groupes isocyanate à la somme des groupes hydroxy du polyol et de l'agent d'extension de chaîne, se situant dans une plage allant de 96 à 105.

2. Matière à mouler polyuréthanne thermoplastique selon la revendication 1, pouvant être obtenue par l'utilisation de polyadipates d'éthylèneglycol, diéthylèneglycol, propanediol, butanediol, pentanediol, néopentylglycol, de polycarbonates, de polytétrahydrofurannes ou d'associations de ceux-ci, de copolymères de polycaprolactones avec des polycarbonates et le polytétrahydrofuranne, le polypropylèneglycol, le polyéthylèneglycol ou des mélanges de ceux-ci en tant que composant polyol.

3. Matière à mouler polyuréthanne thermoplastique selon la revendication 1 ou la revendication 2, pouvant être obtenue par l'utilisation de 1,6-hexanediol en tant qu'agent d'extension de chaîne.

4. Utilisation d'une matière à mouler polyuréthanne thermoplastique pouvant être obtenue selon la revendication 1 ou 2, pour la production de matériaux pour surfaces destinés à être utilisés à l'intérieur d'automobiles.

5. Utilisation d'une matière à mouler polyuréthanne thermoplastique pouvant être obtenue selon la revendication 1 ou 2, pour la fabrication d'emballage de produits alimentaires.

6. Utilisation d'une matière à mouler polyuréthanne thermoplastique pouvant être obtenue selon la revendication 1 ou 2, pour la fabrication de corps moulés, de films et de non-tissés pour des applications hygiéniques et médicales.

7. Utilisation d'une matière à mouler polyuréthanne thermoplastique pouvant être obtenue selon la revendication 1 ou 2, pour la fabrication de colles fusibles et de matières adhésives pour des applications textiles.
